# EUROPÄISCHE PATENTSCHRIFT

(11) **EP 1 722 182 B1**
(45) Veröffentlichungstag und Bekanntmachung des Hinweises auf die Patenterteilung: **25.09.2019**
(21) Anmeldenummer: 06009756.5
(22) Anmeldetag: 11.05.2006
(51) Int. Cl.: F25B 39/04, F25D 23/00, F25D 21/14, F28D 20/02, F28F 13/00, C09K 5/06, F28D 20/00

(54) **Kühl- und/oder Gefriergerät**
Cooling and/or freezing apparatus
Appareil de réfrigération et/ou de congélation

(30) Priorität: 11.05.2005 DE 202005007481 U
(43) Veröffentlichungstag der Anmeldung: 15.11.2006
(73) Patentinhaber: Liebherr-Hausgeräte Ochsenhausen GmbH, 88416 Ochsenhausen (DE)
(72) Erfinder: Wiest, Matthias, 88416 Hattenburg (DE); Ertel, Thomas, D-88299 Leutkirch (DE); Gindele, Thomas, D-88299 Leutkirch (DE); Laube, Viktor, D-88416 Ochsenhausen (DE)
(74) Vertreter: Herrmann, Uwe

(56) Entgegenhaltungen:
- EP-A- 0 557 544
- EP-A- 0 794 396
- EP-A- 1 293 738
- EP-A1- 0 843 138
- DE-A1- 19 948 480
- FR-A- 1 416 502
- GB-A- 299 783
- GB-A- 1 020 211
- JP-A- 6 094 312
- US-A- 2 191 198
- US-A- 2 497 450
- US-A- 2 595 328
- US-A- 4 250 717
- US-A- 4 596 250
- US-A- 5 782 106
- US-A1- 2002 108 393
- US-A1- 2003 014 987
- DATABASE WPI Section PQ, Week 198718 Derwent Publications Ltd., London, GB; Class Q75, AN 1987-127328 XP002398945 -& NL 8 502 473 A (JACOBUS MARIA JOANNUS KOCHX) 1. April 1987 (1987-04-01)
- PATENT ABSTRACTS OF JAPAN Bd. 2003, Nr. 12, 5. Dezember 2003 (2003-12-05) -& JP 2004 189999 A (OSAKA GAS CO LTD), 8. Juli 2004 (2004-07-08)
- DATABASE WPI Week 199337 Derwent Publications Ltd., London, GB; AN 1993-294427 XP002440726 -& SU 1 763 822 A1 (MOSC MEAT DAIRY INST) 23. September 1992 (1992-09-23)

## Beschreibung

Vorbekannte Kühl- und/oder Gefriergeräte weisen mindestens einen Kühlmittelkreislauf auf, der üblicherweise mindestens einen Verdampfer, mindestens einen Verdichter, mindestens einen Verflüssiger sowie mindestens eine Drossel umfasst. Das in dem Verdampfer befindliche Kühlmittel nimmt im Bereich des Kühlraumes des Gerätes Wärme auf, wodurch der Kühlraum gekühlt wird. Dabei kommt es zu einer Verdampfung des Kühlmittels. In dem Verflüssiger vollzieht sich der umgekehrte Vorgang. In diesem wird dem Kühlmittel Wärme entzogen, wodurch das in dem Verflüssiger befindliche Kühlmittel vom gasförmigen in den flüssigen Zustand übergeht.

Um die Effizienz der Wärmeabfuhr im Bereich des Verflüssigers zu verbessern, ist es weiter bekannt, Systeme vorzusehen, in denen eine Flüssigkeit mit großer Wärmekapazität in einem geeigneten Behältnis vorzugsweise um den Verflüssiger herum angeordnet ist. Diese Flüssigkeit nimmt ohne wesentliche Temperaturänderung eine erhebliche Wärmemenge auf, die dem in dem Verflüssiger befindlichen Kühlmittel entzogen wird. Aus der WO 02/066911 A1 ist ein Kühlgerät mit einem Drahtrohr-Verflüssiger bekannt, der von einer Flüssigkeit, beispielsweise von Wasser umgeben ist. Eine ähnliche Anordnung ist aus der DD 293 638 A5 bekannt, die ein Kühlgerät offenbart, dessen Verflüssiger in einem wärmespeichernden Medium angeordnet ist. Bei dem wärmespeichernden Medium kann es sich beispielsweise um Wasser handeln. Die EP 0 866 289 A2 offenbart ein Kühlgerät mit einem Verflüssiger, der ebenfalls in einem wärmespeichernden Medium, beispielsweise in einer Mischung aus Alkohol und Wasser, aufgenommen ist. Aus der EP 1 229 293 A1 ist ein Verflüssiger eines Kühlgerätes bekannt, der in einem Behältnis angeordnet ist, das eine Flüssigkeit mit hoher Wärmekapazität aufweist, wobei es sich bei der Flüssigkeit um Wasser, wäßrige Salzlösungen, um eutektische Gemische, Silikongels oder um wäßrige Lösungen von Cellulosederivaten handelt.

Aus der US 2 497 450 A ist ein Kältegerät mit einem Kältemittelkreislauf bekannt, welcher aus einem Kompressor, einem Verflüssiger und einem Verdampfer besthet. Der Kompressor umfasst eine Niederdruck- und eine Hochdruckstufe. Das aus der Niederdruckstufe hervorgehende Kältemittel wird zu einer Abkühlleitung gefördert und gelangt von dieser zu der Hochdruckstufe des Kompressors. Das von der Hochdruckstufe des Kompressors ausgehende gasförmige Kältemittel wird zu dem Verflüssiger gefördert. Dieser befindet sich zusammen mit der Abkühlleitung in einem geschlossenen Behälter, der mit einem Latentwärmespeichermittel gefüllt ist.

Aus der FR 1 416 502 A ist ein Kältegerät mit einem Kompressor und einem Verflüssiger bekannt, wobei die obere Hälfte des Kompressors Teil einer Verdunstungsschale darstellt.

Es ist die Aufgabe der vorliegenden Erfindung ein Kühl- und/oder Gefriergerät der eingangs genannten Art dahingehend weiterzubilden, dass die Effizienz der Verflüssigung im Verflüssiger des Kühlmittelkreislaufes weiter verbessert wird.

Diese Aufgabe wird durch ein Kühl- und/oder Gefriergerät mit den Merkmalen des Anspruchs 1 gelöst. Dabei ist ein Latentwärmespeicher mit einem Latentwärmespeichermittel vorgesehen, wobei der Latentwärmespeicher derart angeordnet ist, dass er vom Verflüssiger abgegebene Wärme aufnimmt und wobei das Latentwärmespeichermittel derart ausgeführt ist, dass es bei Aufnahme von vom Verflüssiger abgegebener Wärme einen Phasenwechsel erfährt. Der Phasenwechsel wird während der Stehzeit des Kältekreislaufs durch Wärmeabgabe an die Umgebung umgekehrt. Der Begriff "Umgebung" ist nicht auf Umgebungsluft beschränkt. Vielmehr kann es sich dabei um jedes beliebige Medium handeln. Die vorliegende Erfindung macht sich somit die Erkenntnis zu nutze, dass ein niedriges Temperaturniveau am Verflüssigerausgang dadurch möglich ist, dass das Latentwärmespeichermittel bei Zufuhr der vom Verflüssiger abgegebenen Wärme einen Phasenübergang erfährt. Während des Phasenübergangs nimmt das Latentwärmespeichermittel eine vergleichsweise große Wärmemenge ohne Temperaturänderung auf, was dazu führt, dass die Verflüssigung des Kühlmittels im Verflüssiger des Kühlmittelkreislaufes bei tieferer Temperatur erfolgt und somit die Effizienz des Verdichters steigt.

In bevorzugter Ausgestaltung der Erfindung ist vorgesehen, dass das Latentwärmespeichermittel bei Aufnahme der von dem Verflüssiger abgegebenen Wärme einen Phasenwechsel fest-flüssig erfährt. Grundsätzlich ist es ebenso denkbar, ein Latentwärmespeichermittel einzusetzen, das bei der Wärmeaufnahme vom flüssigen in den gasförmigen Zustand übergeht.

Vorzugsweise wird als Latentwärmespeichermittel ein Medium eingesetzt, das bei Raumtemperatur fest ist.

Der Latentwärmespeicher steht in bevorzugter Ausgestaltung der Erfindung in unmittelbarem Kontakt mit dem Verflüssiger.

Hinsichtlich des Latentwärmespeichermittels gibt es an sich keine Beschränkungen, solange dieses bei den üblicherweise vom Verflüssiger abgegebenen Wärmemengen den gewünschten Phasenwechsel erfährt. Bevorzugte Latentwärmespeichermittel sind Paraffin und/oder ein Salzhydrat.

Das erfindungsgemäße Kühl- und/oder Gefriergerät bringt neben dem oben genannten Vorteil den weiteren Vorteil mit sich, dass auch die Stehzeit des Verdichters zur Wärmeabgabe genutzt werden kann.

Durch den Einsatz des erfindungsgemäßen Latentwärmespeichermittels läßt sich der Energieverbrauch des Gerätes optimieren. Durch die Verwendung des Latentwärmespeichermittels kann die Ausgangstemperatur und die Kondensationstemperatur des Kühlmittels im Verflüssiger gesenkt werden, um die Kälteleistung und die Energieeffizienz zu erhöhen.

Der Latentwärmespeicher kann ein Mittel aufweisen, in dem das Latentwärmespeichermittel aufgenommen ist, wobei das Mittel derart ausgeführt ist, dass es bei Aufnahme von vom Verflüssiger abgegebener Wärme keinen Phasenwechsel vornimmt. Der Latentwärmespeicher kann somit derart ausgeführt sein, dass sich makroskopisch stets ein fester Zustand ergibt. Das Latentwärmespeichermittel ist nach dem angestrebten Phasenübergang jedoch beispielsweise flüssig, so daß mikroskopisch eine flüssige Phase vorliegt.

Bei dem genannten Mittel kann es sich zum Beispiel um eine Matrix, insbesondere um eine Polymermatrix handeln, in der das Latentwärmespeichermittel eingebettet ist. Die Matrix stellt sicher, dass es bei der Wärmeaufnahme zu keinem Phasenwechsel des Latentwärmespeichers insgesamt kommt, d.h. dass nur das Latentwärmespeichermittel den Phasenwechsel erfährt.

Dementsprechend besteht eine bevorzugte Ausgestaltung der Erfindung darin, dass der Latentwärmespeicher ein in Kunststoff eingebettetes Latentwärmespeichermittel aufweist, wobei der Kunststoff bei Aufnahme von vom Verflüssiger abgegebener Wärme keinen Phasenwechsel erfährt. Denkbar ist beispielsweise, dass Paraffin oder ein anderes geeignetes Latentwärmespeichermittel in einem Kunststoff eingebettet ist, der in dem üblicherweise auftretenden Temperaturbereich keinen Phasenübergang erfährt. Der Kunststoff stellt sicher, dass das Paraffin bzw. sonstige Latentwärmespeichermittel bei der entsprechenden Verflüssigung nicht verlaufen kann, sondern im Kunststoff eingebettet verbleibt.

Insbesondere bei einer derartigen Lösung kann der Latentwärmespeicher gleichzeitig tragende Funktionen übernehmen. Denkbar ist beispielsweise, dass der Latentwärmespeicher den Verflüssiger teilweise oder vollständig trägt. Beispielsweise ist es denkbar, dass der Verflüssiger Wärmetauscherrohre aufweist, die in dem Latentwärmespeicher teilweise oder vollständig aufgenommen sind. Selbstverständlich ist jede beliebige andere Art und Weise der Anordnung des Latentwärmespeichers denkbar.

Durch die Verwendung von festen, vorzugsweise plattenförmigen Latentwärmespeichern können herkömmliche Versteifungselemente, wie Draht oder Lamellen, und Lackierungen entfallen, was Kostenvorteile mit sich bringt. Eine Umhüllung des Latentwärmespeichers kann entfallen, wenn der Latentwärmespeicher stets makroskopisch fest ist.

Das Latentwärmespeichermittel kann als Additiv einen wärmeleitenden Stoff enthalten, wie z.B. Graphit, um die Wärmeleitfähigkeit und damit auch die Effizienz weiter zu steigern.

In weiterer Ausgestaltung der Erfindung ist vorgesehen, dass der Latentwärmespeicher eine Hülle, insbesondere eine Kunststoffhülle aufweist, in der das Latentwärmespeichermittel aufgenommen ist. In der Hülle vollzieht sich bei Wärmezufuhr der gewünschte Phasenwechsel.

In weiterer Ausgestaltung der Erfindung ist vorgesehen, dass der Verflüssiger im Bereich einer Außenfläche, vorzugsweise auf der rückwärtigen Seite des Kühl- und/oder Gefriergerätes angeordnet ist.

Der Latentwärmespeicher kann auf der von der Außenseite des Kühl- und/oder Gefriergerätes abgewandten Seite des Verflüssigers angeordnet sein.

Der Verflüssiger kann allseitig luftumströmt sein. Zwingend ist dies jedoch nicht. Der Verflüssiger kann als Außenhautverflüssiger ausgeführt sein. Die geometrische Position des Außenhautverflüssigers, wenn dieser an der Geräterückwand angebracht ist, kann im Vergleich zum allseitig luftumströmten Verflüssiger unverändert bleiben. Dadurch kann die Isolationsstärke an der Geräterückwand entsprechend erhöht werden. Die Anbringung und Ausführung des Latentwärmespeichers ist in diesem Fall vereinfacht, weil eine freie Zugänglichkeit desselben nicht gegeben ist und dadurch ansonsten erforderliche Schutzmaßnahmen wie Kapselung gegen mechanische und klimatische Einflüsse entfallen können.

Der Verflüssiger kann zumindest teilweise in dem Gehäuse des Kühl- und/oder Gefriergerätes angeordnet sein. Durch Anbringung um Gehäuseinneren können Fertigungskosten gesenkt werden und der optische Eindruck des Gerätes kann verbessert werden.

Der Latentwärmespeicher kann aufgrund seiner Struktur in jeder beliebigen Form auf den Verflüssiger aufgebracht werden.

Durch Oberflächenvergrößerung kann der Wärmeübergang des Latentwärmespeichers an die Luft/Rückwand verbessert werden. Die Oberflächenvergrößerung kann durch Rippen oder Lamellen erfolgen.

Die Anordnung des Latentwärmespeichers ist an sich beliebig. Denkbar ist beispielsweise, den Latentwärmespeicher auf der von der Außenseite abgewandten Seite des Verflüssigers oder auch zwischen den Rohren des Verflüssigers anzuordnen.

Auch die Ausführung des Verflüssigers ist weitgehend beliebig. Der Verflüssiger kann beispielsweise als Drahtrohr- oder Lamellenverflüssiger ausgeführt sein. Die Verflüssigerrohre können z.B. waagrecht oder auch senkrecht angeordnet sein.

Das Latentwärmespeichermittel kann ein oder mehrere Additive enthalten, die den Schmelzpunkt des Latentwärmespeichermittels verändern. Durch den Zusatz von Additiven kann der Schmelzpunkt des Latentwärmespeichermittels somit je nach Kühl- bzw. Gefriergerät eingestellt werden.

Der Latentwärmespeicher kann die Oberfläche des Verflüssigers ebenso schützen, wie ein Lack. Daher kann auf Lackierung verzichtet werden, was zu einer Kostensenkung führt.

Besonders vorteilhaft ist es, wenn der Latentwärmespeicher ein oder mehrere Rohre oder Rohrschlangen aufweist, die an einer Platte, vorzugsweise an einem Blech befestigt sind. Ferner kann der Latentwärmespeicher an den Rohren oder Rohrschlangen befestigt sein. Auf diese Weise läßt sich eine optisch ansprechende Lösung realisieren, die zudem die Beschädigungsgefahr für den Latentwärmespeicher verringert. Darüber hinaus ergibt sich der Vorteil, dass die Verschmutzungsanfälligkeit des Verflüssigers reduziert wird.

Besonders vorteilhaft ist es, wenn der Latentwärmespeicher und der Verflüssiger eine Einheit bilden, die vor dem Schäumen montiert ist. Dabei kann diese Einheit kostengünstig hergestellt werden. Diese Einheit umfaßt vorzugsweise die oben genannte Platte bzw. Blech, auf die der Verflüssiger montiert ist. Beispielsweise wird die Rohrschlange des Verflüssigers auf das Blech aufgeklebt. Das Latentwärmespeichermittel des Latentwärmespeichers kann z. B. in einem Beutel aufgenommen sein, der auf die Rohrschlangen aufgeklebt ist. Die komplette Einheit wird vor dem Schäumen montiert. Hierdurch ergibt sich nicht nur der Vorteil einer einfachen und kostengünstigen Montage, sondern auch der, dass eine spätere Beschädigung des Latentwärmespeichers verhindert wird.

Aus dem Stand der Technik bekannte Wärmespeicher werden in Zwischenräume an freiliegenden Verflüssigern eingeschoben oder in separaten Kammern oder Rohrsystemen eingebracht. Hierdurch wird die Luftzirkulation um den Verflüssiger verschlechtert, was einen Teil des Optimierungspotentials durch den Wärmespeieher wieder aufhebt. Zudem besteht die Gefahr der Beschädigung des Wärmespeichers. Bei der vorgenannten erfindungsgemäßen Lösung ist eine spätere Beschädigung des Latentwärmespeichers ausgeschlossen. Darüber hinaus ergibt sich eine optisch ansprechende Lösung, bei der von außen nur die Platte sichtbar ist, auf der die Rohre bzw. Rohrschlangen des Latentwärmespeichers angeordnet sind. Der Latentwärmespeicher befindet sich in einer Ausgestaltung der Erfindung auf den Rohren bzw. Rohrschlangen des Verflüssigers. Die Befestigung des Verflüssigers in der Platte sowie des Latentwärmespeichers an dem Verflüssiger kann beispielsweise durch Kleben erfolgen.

In weiterer Ausgestaltung der Erfindung ist vorgesehen, dass die Wärmeabgabe des Verflüssigers mittelbar, d. h. über ein weiteres Medium an Luft erfolgt, d. h. die Wärmeabgabe muß nicht direkt an die Luft erfolgen. Denkbar ist z. B. ein Wärmeübergang vom Verflüssiger an den Latentwärmespeicher und von diesem nicht direkt an die Luft, sondern zunächst an ein Blech und von diesem an die Luft.

In einer weiteren Ausgestaltung der Erfindung weist das Latentwärmespeichermittel eine örtlich veränderliche Schmelztemperatur bzw. Phasenwechseltemperatur auf. Die Schmelztemperatur kann beispielsweise über die Länge des Verflüssigers verteilt variieren. Beispielsweise ist denkbar, dass sich die Schmelztemperatur kontinuierlich über die Länge des Verflüssigers ändert.

Der Verflüssiger kann als "Rohr in Rohr" - Verflüssiger ausgeführt sein. Dabei weist der Verflüssiger ein erstes, äußeres Rohr und ein zweites, inneres Rohr auf, das wenigstens abschnittsweise in dem ersten Rohr verläuft, wobei sich in dem ersten Rohr das Kühlmittel oder das Latenwärmespeichermittel und in dem zweiten Rohr das andere Mittel (Latentwärmespeichermittel oder Kühlmittel) befindet. Die Längsachsen der Rohre verlaufen vorzugsweise parallel oder im Wesentlichen parallel zueinander. Beide Rohre können Krümmungen oder Windungen aufweisen. Denkbar ist beispielsweise ferner, dass im Wesentlichen das innere Rohr Krümmungen oder Windungen aufweist, wohingegen das erste, äußere Rohr keine oder weniger Krümmungen oder Windungen aufweist.

Vorzugsweise wird zwischen den beiden Rohren ein Ringraum gebildet, der von dem Latentwärmespeichermittel oder von dem Kühlmittel durchströmt wird bzw. in dem sich das Latentwärmespeichermittel oder das Kühlmittel befindet. In dem innen liegenden Rohr befindet sich das andere der genannten Mittel, d.h. das Kühlmittel oder das Latentwärmspeichermittel.

Denkbar ist, dass das Latentwärmespeichermittel das Innenrohr oder den genannten Ringraum durchströmt oder darin ruhend angeordnet ist.

Das erste, äußere Rohr und/oder das zweite, innere Rohr können aus Metall oder Kunststoff bestehen. Die Radien der Rohre und ihre Dicke sind beliebig wählbar. Beispielsweise kann vorgesehen sein, dass die Rohre konzentrisch zueinander verlaufen.

Das erste, äußere Rohr und/oder das zweite, innere Rohr können dieselbe Länge oder unterschiedliche Längen aufweisen.

Denkbar ist z.B., dass erste, äußere Rohr an jeder beliebigen Stelle angebracht ist, beispielsweise nur im unteren, nur im oberen oder im unteren und oberen Bereich des Verflüssigers.

Der Verflüssiger kann z.B. mäanderförmig ausgeführt sein.

Denkbar ist ferner, dass der Verflüssiger auf einer Platte, insbesondere auf einem Metallblech aufgebracht ist.

Vorzugsweise ist vorgesehen, dass der Verflüssiger Krümmungen aufweist, insbesondere mäanderförmig ausgeführt ist und dass sich zwischen unterschiedlichen Abschnitten des Verflüssigers Drähte oder Lamellen zur Verbesserung der Wärmeabgabe befinden. Ist der Verflüssiger mäanderförmig ausgeführt, können sich diese Drähte oder Lamellen beispielsweise zwischen parallelen Abschnitten des Verflüssigers erstrecken.

Erfindungsgemäß ist der Verflüssiger in einem mit dem Latentwärmespeichermittel gefüllten Behältnis aufgenommen. Der Verflüssiger istsomit zusammen mit dem Latentwärmespeichermittel in einem Behälter untergebracht. Das Behältermaterial und die Behälterform sind frei wählbar. Zu bevorzugen ist ein gut wärmeleitendes Material, wie z.B. Blech, und eine Form, die die Wärmeabgabe begünstigt. Der Behälter kann beispielsweise Rippen aufweisen, die die Wärmeabgabe fördern.

Befindet sich der Verflüssiger in dem Behälter, geht die Abwärme des Verflüssigers in das Latentwärmespeichermittel über.

Nach einer weiteren Ausgestaltung der Erfindung befindet sich auch der Kompressor in dem Behälter. Die Abwärme beider Komponenten geht in das Latentwärmespeichermittel über.

Erfindungsgemäß ist der Behälter derart ausgeführt, dass er gleichzeitig die Funktion der Verdunstungsschale übernimmt.

In weiterer Ausgestaltung der Erfindung sind zum Zwecke der Wärmeabfuhr mit dem Latentwärmespeicher bzw. mit dem Latentwärmespeichermittel in Verbindung stehende Wärmetauscherrohre vorgesehen, die die Wärme effektiv aus dem Latentwärmespeichermittel abführen.

In einer weiteren Ausgestaltung der Erfindung ist vorgesehen, das Latentwärmespeichermittel direkt in den Kühlmittelkreislauf einzubringen. Dabei ist vorzugsweise vorgesehen, dass sich das Latentwärmespeichermittel (z. B. Paraffin) in den von Kühlmittel durchströmten Bereichen des Verflüssigers befindet. Vorzugsweise ist das Latentwärmespeichermittel gekapselt. Es kann in Form von Kügelchen oder Stäben vorliegen, deren Kapselung beispielsweise aus Quarz oder einer Folie besteht. In dieser Ausgestaltung ist vorzugsweise vorgesehen, dass das Latentwärmespeichermittel nicht aus den für dieses vorgesehenen Bereichen, beispielsweise aus den Verflüssigerrohren austreten kann.

Um die Wärmeabgabe des Systems zu unterstützen, kann vorgesehen sein, dass die Oberfläche des Verflüssiger-Latentwärmespeicher-Systems schwarz, vorzugsweise matt schwarz ausgeführt ist.

In weiterer Ausgestaltung der Erfindung ist zum Zwecke der Verbesserung der Luftzirkulation wenigstens ein Ventilator vorgesehen, der derart angeordnet ist, dass er um das Verflüssiger-Latentwärmespeicher-System eine Luftströmung erzeugt.

Das Latentwärmespeichermittel kann als Lackersatz auf den Verflüssiger aufgebracht sein und somit neben seiner Funktion als Latentwärmespeichermittel den Verflüssiger vor Korrosion schützen.

Weiterhin können Wärmetransportmittel vorgesehen sein, die die Abwärme des Verflüssiger-Latentwärmespeicher-Systems an eine andere Stelle, beispielsweise an eine Tischplatte oder ein Auftaufach, d.h. zu einer Wärmesenke, transportieren, um dort einen Zusatznutzen zu erfüllen. Bei den Wärmetransportmitteln kann es sich z.B. um Luftkanäle oder Wärmerohre handeln.

Der Latentwärmespeicher des Verflüssiger-Latentwärmespeicher-Systems kann an beliebiger Position an oder in dem Kühl- und/oder Gefriergerät angebracht werden, um dort einen Zusatznutzen in Form von Wärmeabgabe zu erfüllen. Beispielsweise ist das Verflüssiger-Latentwärmespeicher-System an oder in dem Kühl- und/oder Gefriergerät derart angeordnet, dass die Abwärme des Verflüssiger-Latentwärmespeicher-Systems für eine warme Tischplatte (=Gerätedecke), ein Auftaufach oder eine entnehmbare Wärmflasche genutzt wird.

Das Latentwärmespeichermittel kann in einer weiteren Ausgestaltung der Erfindung in einem Rohr-an-Rohr-Verflüssiger eingebracht werden, wobei sich in dem eigentlichen Verflüssigerrohr das zu verflüssigende Kühlmittel und in dem anderen der Rohre das Latentwärmespeichermittel befindet. Ein Vorteil einer derartigen Anordnung ist die verbesserte Wärmeleitfähigkeit, d.h. die schnellere Wärmeabgabe bzw. -aufnahme. Das oder die Rohre des Latentwärmespeichers wird mit dem oder den Verflüssigerrohren im Hinblick auf den Wärmeübergang in idealen wärmeleitenden Kontakt gebracht, z.B. aufgelötet, aufgeschweißt, aufgeklebt, verschraubt, geklemmt etc.

Das Rohr bzw. die Rohre des Latentwärmespeichers, d.h. die mit dem Latentwärmespeichermittel gefüllten Rohre können hinsichtlich ihres Materials (z.B. Metall oder Kunststoff), ihrer Länge, ihres Durchmessers und ihrer Anzahl so angepasst werden, dass die ideale Menge des Latentwärmespeichermittels aufgenommen werden kann und fertigungstechnisch Vorteile bietet.

Das oder die Rohre des Latentwärmespeichers können mit dem oder den Rohren des Verflüssigers beispielsweise durch Löten, Schweißen, Kleben, Schrauben, Klemmen etc. miteinander verbunden sein.

Das oder die Rohre des Latentwärmespeichers können denselben oder einen anderen Durchmesser aufweisen, wie/als das oder die Rohre des Verflüssigers. Je nach benötigter Menge an Latentwärmespeichermittel können die Rohre des Latentwärmespeichers denselben Durchmesser aufweisen wie die Verflüssigerrohre oder diese im Durchmesser über- oder auch unterschreiten.

Das oder die Rohre des Latentwärmespeichers und das oder die Rohre des Verflüssigers sind in einer weiteren Ausführung der Erfindung wenigstens abschnittsweise aufeinander angebracht.

Um die Wärmeabgabe zu verbessern, kann vorgesehen sein, dass das oder die Rohre des Latentwärmespeichers auf ihrer von den Verflüssigerrohren abgewandten Seite und/oder dass das oder die Rohre des Verflüssigers auf ihrer von den Latentwärmespeicherrohren abgewandten Seite eine Bedrahtung, Lamellen oder sonstige Mittel zur Verbesserung der Wärmeabgabe aufweisen.

Denkbar ist ferner, dass das oder die Rohre des Latentwärmespeichers und das oder die Rohre des Verflüssigers wenigstens abschnittsweise nebeneinander angebracht sind. Auch bei einer solchen Ausführung der Erfindung kann vorgesehen sein, dass die nebeneinander angebrachten Rohre des Latentwärmespeichers und des Verflüssigers auf einer oder beiden Seiten eine Bedrahtung zur Verbesserung der Wärmeabgabe aufweisen.

Auch ist grundsätzlich denkbar, die Rohre des Verflüssigers und die Rohre des Latentwärmespeichers teils nebeneinander und teils aufeinander anzuordnen.

Grundsätzlich ist denkbar, dass die nebeneinander angeordneten Rohre unmittelbar aneinandergrenzen. Denkbar ist beispielsweise, dass die Verflüssigerrohre im Wechsel mit den Rohren des Latentwärmespeichers angeordnet sind und die Rohre aneinandergrenzen. Denkbar ist auch, dass ein oder mehrere Rohre des Latentwärmespeichers mit einem oder mehreren Rohren des Verflüssigers zu einer Gruppe verbunden sind und dass zwischen wenigstens zwei dieser Gruppen ein Abstand besteht. Die Rohre können innerhalb der Gruppen unmittelbar aneinandergrenzend angeordnet sein und zwischen den Rohren unterschiedlicher Gruppen kann ein Abstand bestehen. Dies gilt unabhängig davon, ob die Rohre des Latentwärmespeichers denselben oder einen anderen Durchmesser als die Rohre des Verflüssigers aufweisen.

Die Gruppen können beispielsweise aus einem Verflüssigerrohr und einem oder zwei Latentwärmespeicherrohren bestehen. Auch andere Zusammenstellungen, beispielsweise zwei Verflüssigerrohre mit einem oder mehreren Latentwärmespeicherrohren sind vorstellbar.

Die Rohre des Latentwärmespeichers können derart neben den Rohren des Verflüssigers angeordnet sein, dass sie sich oberhalb oder unterhalb oder ober- und unterhalb der Rohre des Verflüssigers befinden.

In weiterer Ausgestaltung der Erfindung ist vorgesehen, dass der Latentwärmespeicher aus einer Rohrschlange besteht, die neben oder auf dem Verflüssigerrohr angeordnet ist.

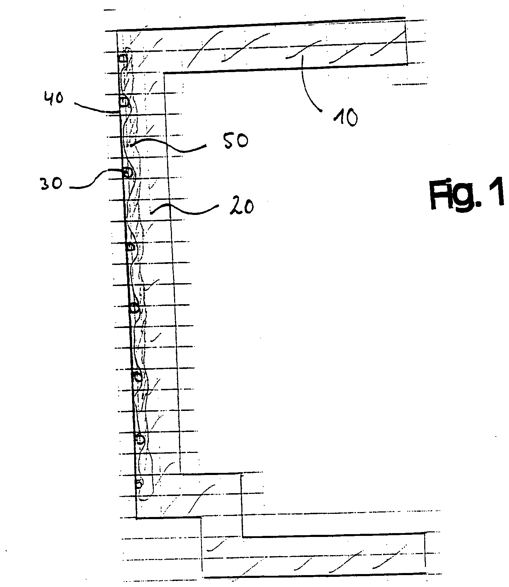

Weitere Einzelheiten und Vorteile der Erfindung werden anhand eines in der Zeichnung dargestellten Ausführungsbeispiels näher erläutert. Der Gegenstand der Figuren 1 bis 5 und 8 bis 18 fällt nicht unter dem Schutzbereich des Patents, dient jedoch zu einem besseren Verständnis der Erfindung. Es zeigen:
Fig. 1: eine schematische Längsschnittdarstellung eines Kühl- und/oder Gefriergerätes,
Fig. 2: schematische Schnittdarstellungen von Verflüssigern mit Latentwärmespeichern,
Fig. 3: eine schematische Längsschnittdarstellung eines Kühl- und/oder Gefriergerätes in einer weiteren Ausführungsform,
Fig. 4: eine Querschnittdarstellung eines Rohr-in-Rohr-Verflüssigers gemäß der Erfindung,
Fig. 5: eine schematische Darstellung eines mäanderförmigen Verflüssigers gemäß Fig. 4,
Fig. 6, 7: schematische Darstellungen eines mit Latentwärmespeichermittel gefüllten Behälters, in dem sich der Verflüssiger bzw. Verflüssiger und Kompressor befinden,
Fig. 8: schematische Darstellungen eines Verflüssigerrohrs im Querschnitt mit darin angeordnetem Latentwärmespeichermittel,
Fig. 9: eine schematische Darstellung eines Rohr-an-Rohr-Verflüssigers im Querschnitt,
Fig. 10: eine Querschnittsansicht eines Rohr-an-Rohr-Verflüssigers mit aufeinander angebrachten Rohren gleichen Durchmessers,
Fig. 11: eine Querschnittsansicht eines Rohr-an-Rohr-Verflüssigers mit nebeneinander angebrachten Rohren gleichen Durchmessers,
Fig. 12: eine Querschnittsansicht eines Rohr-an-Rohr-Verflüssigers mit nebeneinander angebrachten Rohren gleichen Durchmessers, wobei zwischen Rohrgruppen ein Abstand besteht,
Fig. 13: eine Querschnittsansicht eines Rohr-an-Rohr-Verflüssigers mit nebeneinander angebrachten Rohren unterschiedlichen Durchmessers,
Fig. 14, 15: Querschnittsansichten von Rohr-an-Rohr-Verflüssigern mit nebeneinander angebrachten Rohren unterschiedlichen Durchmessers, wobei zwischen Rohrgruppen ein Abstand besteht,
Fig. 16: eine Draufsicht auf einen Rohr-an-Rohr-Verflüssiger mit ober- und unterhalb der Verflüssigerrohre angebrachten Latentwärmespeicherrohren,
Fig. 17: eine Draufsicht auf einen Rohr-an-Rohr-Verflüssiger mit nur unterhalb der Verflüssigerrohre angebrachten Latentwärmespeicherrohren und
Fig. 18: eine Draufsicht auf einen Rohr-an-Rohr-Verflüssiger mit einem als Rohrschlange ausgeführten Latentwärmespeicher mit gleichem oder unterschiedlichen Durchmesser wie das Verflüssigerrohr, wobei die Latentwärmespeicher-Rohrschlange auf oder neben der Rohrschlange des Verflüssigers angeordnet ist.

Das Gerät 10 gemäß Fig. 1 weist im Bereich seiner rückseitigen Wand 20 den aus Rohren bzw. Rohrschlangen 30 bestehenden Verflüssiger auf. Die Rohre bzw. Rohrschlangen 30 sind auf einem Blech 40 aufgeklebt, das die von hinten sichtbare Außenseite des Gerätes 10 darstellt. Des Weiteren ist ein Beutel 50 vorgesehen, der mit Paraffin oder einem Salzhydrat als Latentwärmespeichermittel gefüllt ist.

Dieses Latentwärmespeichermittel ist derart ausgewählt, dass in dem Temperaturbereich, in dem der Verflüssiger betrieben wird bzw. bei den von dem Verflüssiger abgegebenen Wärmemengen ein Phasenwechsel fest-flüssig stattfindet. Dadurch wird dem Verflüssiger eine erhebliche Wärmemenge entzogen und die Effizienz der Verflüssigung entsprechend verbessert.

Die komplette Einheit bestehend aus den Rohren bzw. Rohrschlangen 30 des Verflüssigers, dem Blech 40 sowie dem Latentwärmespeicher wird vor dem Schäumen an dem Gerät 10 befestigt. Hierdurch wird eine spätere Beschädigung des Wärmespeichers, wie sie aus dem Stand der Technik bekannt ist, verhindert. Zudem ist die in Zeichnung dargestellte Ausführungsform der Erfindung kostengünstig, wenig verschmutzungsanfällig und darüber hinaus optisch ansprechend.

Neben dem in Fig. 1 dargestellten Ausführungsbeispiel mit einem Latentwärmespeicher, der als mit Latentwärmespeichermittel gefüllter Beutel ausgeführten ist, kommen selbstverständlich auch andere Ausführungsformen des Latentwärmespeichers in Betracht.

Denkbar ist beispielsweise, dass das Latentwärmespeichermittel in einen Kunststoff eingebettet ist, der in dem relevanten Temperaturbereich keinen Phasenübergang erfährt. Bei dem Latentwärmespeichermittel handelt es sich beispielsweise um Paraffin. Kommt es zu einer Verflüssigung des Paraffins, kann dieses nicht verlaufen, sondern verbleibt in dem Kunststoff eingebettet.

Eine derartige Lösung der Erfindung hat den Vorteil, dass der Latentwärmespeicher gleichzeitig tragende Funktionen übernehmen kann. Er kann beispielsweise die Wärmetauscherrohre des Verflüssigers einbetten und stützen. Grundsätzlich kommt jedoch auch jede beliebige andere Art und Weise der Anordnung eines in dieser Weise ausgeführten Latentwärmespeichers in Betracht.

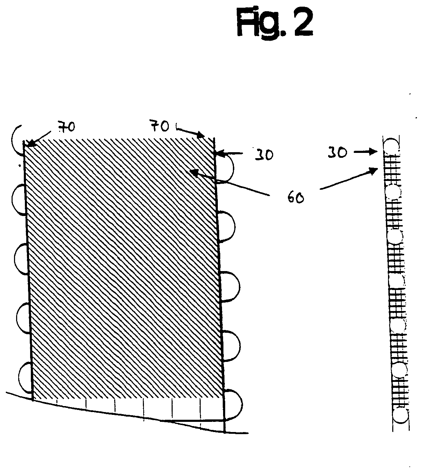

Fig. 2 zeigt unterschiedliche Anordnungen des Latentwärmespeichers 60 relativ zu den Rohren bzw. Rohrschlangen 30 des Verflüssigers. Die Rohre oder Rohrschlangen 30 können sich auf Versteifungselementen 70 befinden, zwischen denen der Latentwärmespeicher 60 mit dem Latentwärmespeichermittel angeordnet ist, wie dies aus Fig. 2, linke Darstellung hervorgeht. Fig. 2, rechte Darstellung zeigt die in vertikaler Richtung beabstandeten Rohre oder Rohrschlangen 30 des Verflüssigers, zwischen denen sich der Latentwärmespeicher 60 befindet.

Vorzugsweise steht der Latentwärmespeicher 60 bzw. das Latentwärmespeichermittel in unmittelbarem Kontakt mit den Rohren oder Rohrschlangen 30 des Verflüssigers. Vorzugsweise geht die Wärme direkt in den Latentwärmespeicher über.

Die Wärme des Latentwärmespeichers wird z.B. über Luftkonvektion oder über Wärmeleitung durch die Rückwand des Gerätes abgeführt.

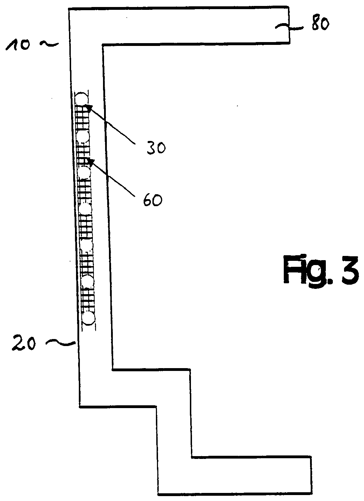

Fig. 3 zeigt die Anordnung des Verflüssigers mit Latentwärmespeicher 60 gemäß Fig. 2, rechte Darstellung im Kühl- bzw. Gefriergerät 10. Der Verflüssiger ist als Außenhautverflüssiger ausgeführt. Das Bezugszeichen 80 kennzeichnet die Isolierung des Gerätes 10 bzw. des Innenbehälters. Der Verflüssiger sowie der Latentwärmespeicher 60 sind im Bereich der Geräterückwand 20 angeordnet. Durch diese Anordnung kann nicht nur die Isolationsstärke an der Geräterückwand erhöht werden. Aufgrund dieser Anordnung kann auch auf Schutzmaßnahmen gegen mechanische oder klimatische Einflüsse weitgehend oder vollständig verzichtet werden. Abgesehen davon bietet diese Anbringung von Verflüssiger und Latentwärmespeicher 60 Fertigungsvorteile sowie eine Verbesserung des optischen Eindruckes des Gerätes.

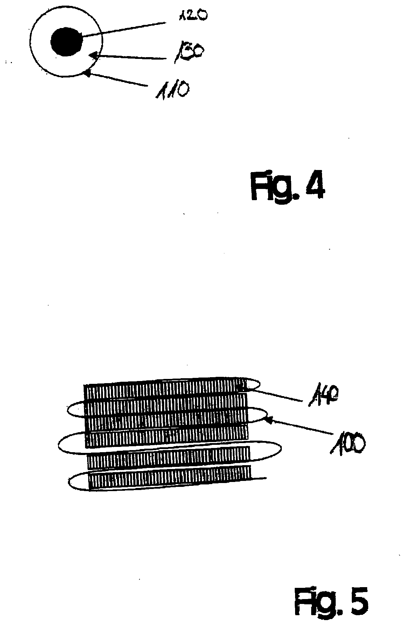

Fig. 4 zeigt einen Rohr in Rohr Verflüssiger 100 im Querschnitt. Er besteht aus zwei konzentrisch angeordneten Rohren 110, 120, deren Längsachsen zueinander parallel verlaufen und von denen das zweite Rohr 120 in dem ersten Rohr 110 verläuft. Die Rohre 110, 120 bestehen aus Metall oder Kunststoff. Das Rohr 120 wird von dem zu verflüssigenden Kühlmittel oder dem Latentwärmespeichermittel durchströmt. Der zwischen den Rohren 110, 120 gebildete Ringraum 130 wird von dem anderen der Mittel, d.h. von Latentwärmespeichermittel oder von Kühlmittel durchströmt.

Die Radien und Dicke der Rohre 110, 120 sind weitgehend beliebig. Das äußere Rohr 110 kann das innere Rohr 120 auf dessen gesamter Länge umschließen. Denkbar ist jedoch auch eine Ausführung, bei der das äußere Rohr 110 nur abschnittsweise das innere Rohr 120 umgibt. Das äußere Rohr 110 kann an jeder beliebigen Stelle des Verflüssigers angeordnet werden. Denkbar ist beispielsweise, das äußere Rohr 110 nur im unteren, nur in oberen oder in beiden Bereichen des Verflüssigers anzuordnen.

Fig. 5 zeigt in einer schematischen Ansicht den Verflüssiger 100. Dieser ist mäanderförmig auf ein Blech aufgebracht und ist zur Verbesserung der Wärmeabgabe mit Drähten oder Lamellen 140 versehen, die sich zwischen den parallelen Bereichen des mäanderförmigen Verflüssigers erstrecken.

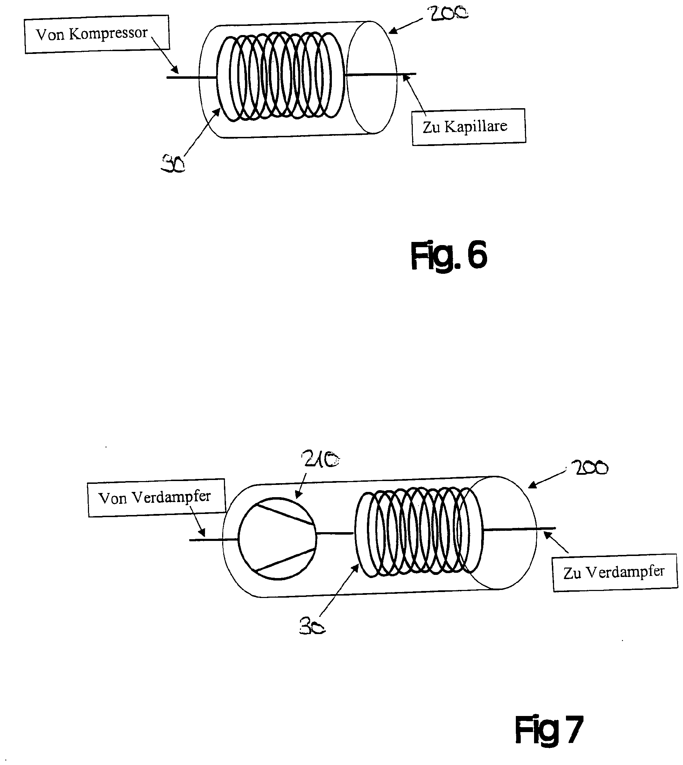

Fig. 6 zeigt einen Behälter 200, in dem sich der Verflüssiger 30 befindet. Der Behälter 200 ist mit Latentwärmespeichermittel gefüllt, das den Verflüssiger 30 umgibt. Das Behältermaterial weist vorzugsweise eine hohe Wärmeleitfähigkeit auf und besteht beispielsweise aus Blech. Durch eine derartige Ausführungsform wird ein guter Wärmeübergang vom Verflüssiger 30 zu dem Latentwärmespeichermittel und ferner ein guter Wärmeübergang vom dem Latentwärmespeicher an die Umgebung erreicht.

Fig. 7 zeigt eine Ausführung, bei der nicht nur der Verflüssiger 30, sondern auch der Kompressor 210 in dem Behälter 200 aufgenommen sind, so dass die Abwärme von Kompressor 210 und von dem Verflüssiger 30 von dem Latentwärmespeichermittel eingeht.

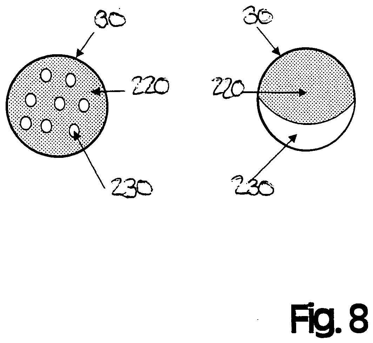

Fig. 8 zeigt zwei Ausführungsformen der Erfindung, bei denen das gekapselte Latentwärmespeichermittel unmittelbar in den Kühlmittelkreislauf eingebracht ist, d.h. mit dem Kühlmittel in Verbindung steht. Fig. 8 zeigt im Querschnitt das Verflüssigerrohr 30, das von Kühlmittel 220 durchströmt wird bzw. in dem sich das Kühlmittel 220 befindet. In dem Kühlmittel 220 befindet sich als Latentwärmespeichermittel Paraffin 230 in Form von Kügelchen, die von Quarz umhüllt sind, oder in Form von mit Folie umwickelten Paraffinstäben.

Fig. 8, linke Darstellung zeigt mehrere über den Querschnitt verteilte Paraffinkügelchen oder Stränge. Fig. 8, rechte Darstellung zeigt einen mit Paraffin 230 gefüllten Bereich. In beiden Fällen sind die mit Paraffin 230 gefüllten Bereiche durch eine geeignete Kapselung von dem Kühlmittel 220 getrennt.

Die in Fig. 8 dargestellte Ausführung ist so gestaltet, dass das Latentwärmspeichermittel nicht aus dem Verflüssiger austreten kann.

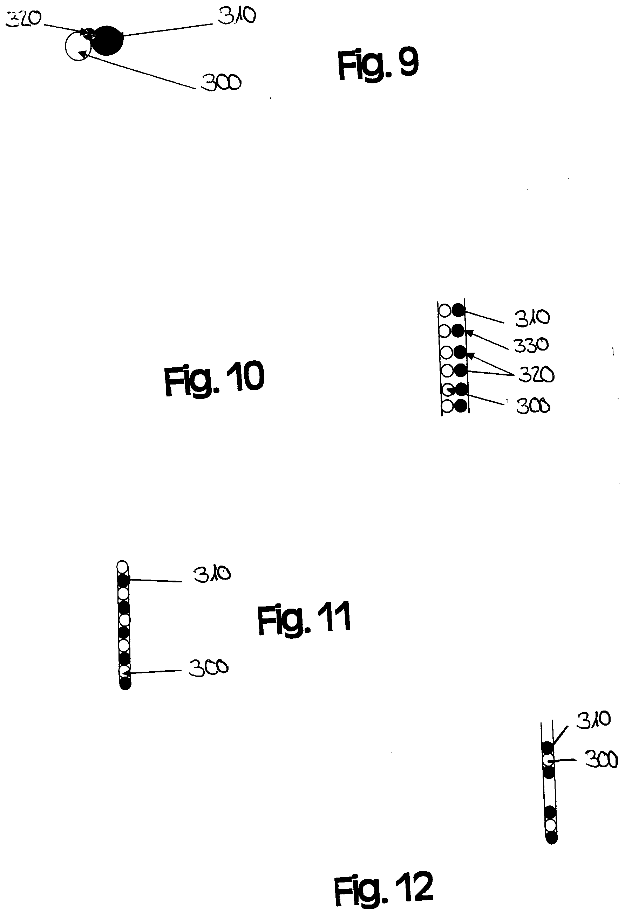

Fig. 9 zeigt im Querschnitt einen Rohr-an-Rohr-Verflüssiger. Er besteht aus einem oder mehreren Verflüssigerrohren 300, die von dem zu verflüssigenden Kühlmittel durchströmt werden, und einem oder mehreren Latentwärmespeicherrohren 310, in denen sich das Latentwärmespeichermittel befindet. Beide Rohre 300, 310 sind durch eine Lötstelle 320 wärmeleitend verbunden. Anstatt durch Verlöten können die Rohre 300, 310 grundsätzlich auch durch Schweißen, Kleben, Schrauben, Klemmen etc. miteinander in Verbindung stehen.

Die wärmeleitende Verbindung weist den Vorteil auf, dass beide Rohre 300, 310 hinsichtlich des Wärmeübergangs in idealen Kontakt gebracht werden. Ein Vorteil der Anordnung gemäß Fig. 9 ist die schnellere Wärmaufnahme bzw. -abgabe.

Die Fig. 10 - 18 zeigen unterschiedliche Beispiele für derartige Rohr-an-Rohr-Verflüssiger.

Fig. 10 zeigt ein Ausführungsbeispiel, bei dem die Rohre 300 des Verflüssigers und die Rohre 310 des Latentwärmespeichers denselben Durchmesser aufweisen und aufeinander angeordnet sind. Unter dem Begriff "aufeinander" ist zu verstehen, dass sich die Rohre in der Draufsicht hintereinander befinden. Grundsätzlich ist auch eine versetzte Anordnung der Rohre denkbar.

Mit dem Bezugszeichen 330 sind Bedrahtungen gekennzeichnet, die die Vorder- und Hinterseite der Anordnung bilden und sowohl mit den Verflüssigerrohren 300 als auch mit den Rohren 310 des Latentwärmespeichers in Verbindung stehen. Die Verbindung zwischen der Bedrahtung und den jeweiligen Rohren kann ebenfalls beispielsweise durch Löten, Schweißen, Kleben, Schrauben, Klemmen etc. erfolgen.

Fig. 11 zeigt ein Ausführungsbeispiel, bei dem die Rohre 300 des Verflüssigers und die Rohre 310 des Latentwärmespeichers denselben Durchmesser aufweisen und nebeneinander angeordnet sind. Unter dem Begriff "nebeneinander" ist zu verstehen, dass sich die Rohre in der Draufsicht nebeneinander befinden.

Fig. 12 zeigt ein Ausführungsbeispiel, bei dem die Rohre 300 des Verflüssigers und die Rohre 310 des Latentwärmespeichers denselben Durchmesser aufweisen und zu Gruppen aus jeweils drei Rohren zusammengefasst sind, wobei die Rohre innerhalb der Gruppen und die Gruppen nebeneinander angeordnet sind. Die Gruppen sind voneinander beabstandet. In diesem Ausführungsbeispiel befindet sich in jeder der Gruppen oberhalb und unterhalb eines Verflüssigerrohre 300 jeweils ein Latentwärmespeicherrohr 310.

In den Ausführungsbeispielen gemäß der Fig. 11 und 12 ist der Rohr-an-Rohr-Verflüssiger beidseitig mit einer Bedrahtung versehen.

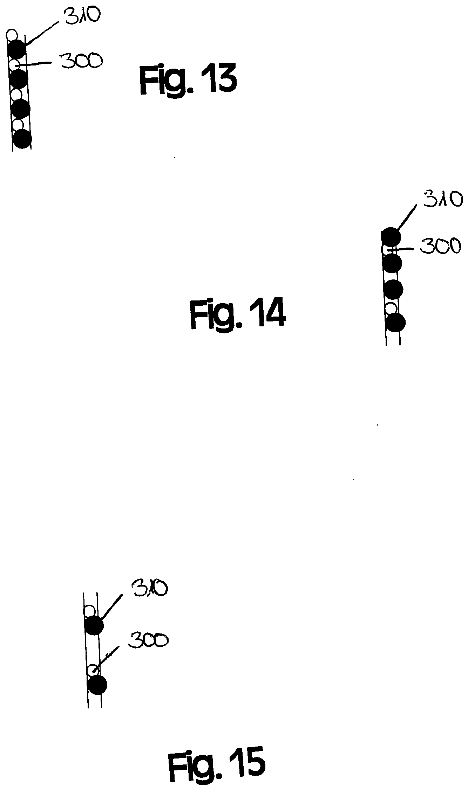

Aus Fig. 13 geht ein Ausführungsbeispiel hervor, bei dem Rohre 300, 310 verschiedenen Durchmessers nebeneinander angebracht sind. Dabei weisen die Rohre 310 des Latentwärmespeichers einen größeren Durchmesser auf als die Verflüssigerrohre 300. Jeweils benachbarte Rohre 300, 310 stehen miteinander in Verbindung.

Fig. 14 und Fig. 15 zeigen Ausführungsbeispiele, bei dem Rohre 300, 310 verschiedenen Durchmessers nebeneinander angebracht sind. Dabei weisen die Rohre 310 des Latentwärmespeichers einen größeren Durchmesser auf als die Verflüssigerrohre 300. Anders als in dem Ausführungsbeispiel gemäß Fig. 13 sind die Rohre zu Gruppen zusammengefasst, die gemäß Fig. 14 aus jeweils zwei Latentwärmespeicherrohren 310 und einem Verflüssigerrohr 300 bestehen, wobei die Rohre 310 oberhalb und unterhalb des Verflüssigerrohrs 300 angeordnet sind. Gemäß Fig. 15 bestehen die Gruppen aus jeweils einem Verflüssigerrohr 300 und einem Latentwärmespeicherrohr 310, d.h. nur eine Seite des Verflüssigerrohrs 300 steht mit einem Latentwärmespeicherrohr 310 in Verbindung. Die Gruppen gemäß der Fig. 14 und Fig. 15 sind voneinander beabstandet.

In den Ausführungsbeispielen gemäß der Fig. 13 bis Fig. 15 ist der Rohr-an-Rohr-Verflüssiger beidseitig mit einer Bedrahtung versehen.

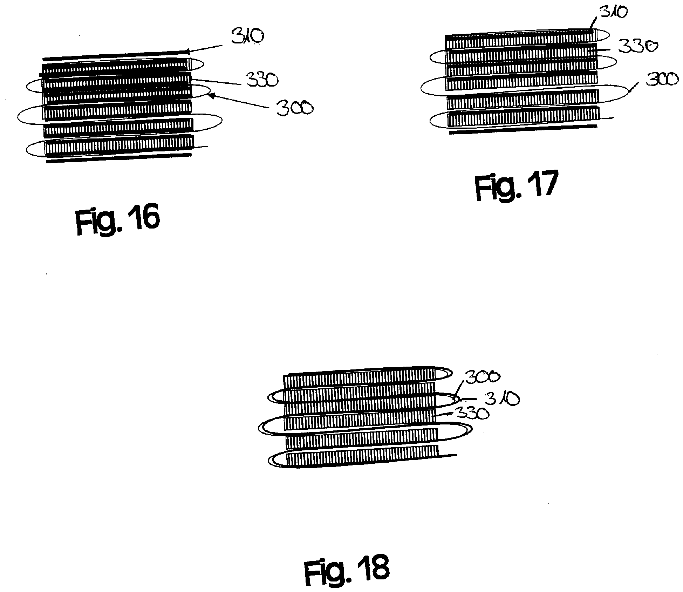

Die Fig. 16 und 17 zeigen Ausführungsbeispiele von Rohr-an-Rohr-Verflüssigern in der Draufsicht, wobei sich in dem Ausführungsbeispiel gemäß Fig. 16 oberhalb und unterhalb des als Rohrschlange ausgeführten Verflüssigerrohrs 300 mit Latentwärmespeichermittel gefüllte Rohrstücke 310 befinden, die parallel zu den horizontalen Abschnitten des Verflüssigerrohrs angeordnet sind, und wobei sich gemäß Fig. 17 nur unterhalb der Verflüssigerrohre 300 mit Latentwärmspeichermittel gefüllte Rohrstücke 310 befinden.

Drähte oder Lamellen 330 vorzugsweise auf beiden Seiten der Anordnung verbessern die Wärmeabgabe.

Aus Fig. 18 ist in der Draufsicht ein Rohr-an-Rohr-Verflüssiger dargestellt, bei dem der Latentwärmespeicher als Rohrschlange ausgeführt ist, deren Rohr 310 den gleichem oder einen anderen Durchmesser wie/als das ebenfalls in Form einer Rohrschlange ausgeführte Verflüssigerrohr 300 aufweist, wobei die Latentwärmespeicher-Rohrschlange auf oder neben der Rohrschlange des Verflüssigers angeordnet ist.

## Patentansprüche

1. Kühl- und/oder Gefriergerät mit mindestens einem Kühlmittelkreislauf, der wenigstens einen Verflüssiger (30) aufweist, sowie einen Latentwärmespeicher mit einem Latentwärmespeichermittel, wobei der Latentwärmespeicher derart angeordnet ist, dass er vom Verflüssiger (30) abgegebene Wärme aufnimmt, und wobei das Latentwärmespeichermittel derart ausgeführt ist, dass es bei Aufnahme von vom Verflüssiger (30) abgegebener Wärme einen Phasenwechsel vornimmt, der während der Stehzeit des Kühlmittelkreislaufs durch Wärmeabgabe an die Umgebung umgekehrt wird, **dadurch gekennzeichnet, dass** der Verflüssiger (30) in einem mit dem Latentwärmespeichermittel gefüllten Behältnis (200) aufgenommen ist und dass das Behältnis (200) derart ausgeführt ist, dass es als Verdunstungsschale dient.

2. Kühl- und/oder Gefriergerät nach Anspruch 1, **dadurch gekennzeichnet, dass** das Latentwärmespeichermittel bei Wärmeaufnahme einen Phasenwechsel fest-flüssig vornimmt.

3. Kühl- und/oder Gefriergerät nach Anspruch 1 oder 2, **dadurch gekennzeichnet, dass** das Latentwärmespeichermittel bei Raumtemperatur fest ist.

4. Kühl- und/oder Gefriergerät nach einem der vorhergehenden Ansprüche, **dadurch gekennzeichnet, dass** das Latentwärmespeichermittel Paraffin und/oder ein Salzhydrat enthält oder aus diesem besteht.

5. Kühl- und/oder Gefriergerät nach einem der vorhergehenden Ansprüche, **dadurch gekennzeichnet, dass** der Latentwärmespeicher ein Mittel aufweist, in dem das Latentwärmespeichermittel aufgenommen ist, wobei das Mittel derart ausgeführt ist, dass es bei Aufnahme von vom Verflüssiger (30) abgegebener Wärme keinen Phasenwechsel vornimmt.

6. Kühl- und/oder Gefriergerät nach Anspruch 5, **dadurch gekennzeichnet, dass** es sich bei dem Mittel um eine Matrix handelt, in der das Latentwärmespeichermittel eingebettet ist.

7. Kühl- und/oder Gefriergerät nach einem der vorhergehenden Ansprüche, **dadurch gekennzeichnet, dass** das Latentwärmespeichermittel ein oder mehrere Additive aufweist, die dessen Wärmeleitfähigkeit erhöhen.

8. Kühl- und/oder Gefriergerät nach Anspruch 7, **dadurch gekennzeichnet, dass** es sich bei dem Additiv um Graphit handelt.

9. Kühl- und/oder Gefriergerät nach einem der vorhergehenden Ansprüche, **dadurch gekennzeichnet, dass** der Latentwärmespeicher den Verflüssiger (30) vollständig trägt.

10. Kühl- und/oder Gefriergerät nach einem der vorhergehenden Ansprüche, **dadurch gekennzeichnet, dass** der Verflüssiger (30) Wärmetauscherrohre aufweist und dass der Latentwärmespeicher zumindest bereichsweise zwischen den Wärmetauscherrohren des Verflüssigers (30) angeordnet ist.

11. Kühl- und/oder Gefriergerät nach einem der vorhergehenden Ansprüche, **dadurch gekennzeichnet, dass** der Verflüssiger (30) Wärmetauscherrohre aufweist, die in dem Latentwärmespeicher aufgenommen sind.

12. Kühl- und/oder Gefriergerät nach einem der vorhergehenden Ansprüche, **dadurch gekennzeichnet, dass** der Latentwärmespeicher eine Hülle aufweist, in der das Latentwärmespeichermittel aufgenommen ist.

13. Kühl- und/oder Gefriergerät nach einem der vorhergehenden Ansprüche, **dadurch gekennzeichnet, dass** der Verflüssiger (30) im Bereich einer Außenfläche des Kühl- und/oder Gefriergerätes angeordnet ist.

14. Kühl- und/oder Gefriergerät nach einem der Ansprüche 1 bis 13, **dadurch gekennzeichnet, dass** der Verflüssiger (30) zumindest teilweise in dem Gehäuse des Kühl- und/oder Gefriergerätes angeordnet ist.

15. Kühl- und/oder Gefriergerät nach einem der vorhergehenden Ansprüche, **dadurch gekennzeichnet, dass** der Latentwärmespeicher Mittel zur Oberflächenvergrößerung aufweist.

16. Kühl- und/oder Gefriergerät nach einem der vorhergehenden Ansprüche, **dadurch gekennzeichnet, dass** der Verflüssiger (30) als Drahtrohr- oder Lamellenverflüssiger ausgeführt ist.

17. Kühl- und/oder Gefriergerät nach einem der vorhergehenden Ansprüche, **dadurch gekennzeichnet, dass** das Latentwärmespeichermittel ein oder mehrere Additive enthält, die den Schmelzpunkt des Latentwärmespeichermittels verändern.

18. Kühl- und/oder Gefriergerät nach einem der vorhergehenden Ansprüche, **dadurch gekennzeichnet, dass** die Wärmeabgabe des Verflüssigers (30) mittelbar an Umgebungsluft erfolgt.

19. Kühl- und/oder Gefriergerät nach einem der vorhergehenden Ansprüche, **dadurch gekennzeichnet, dass** das Latentwärmespeichermittel eine sich örtlich verändernde Schmelztemperatur aufweist.

20. Kühl- und/oder Gefriergerät nach Anspruch 19, **dadurch gekennzeichnet, dass** sich die Schmelztemperatur kontinuierlich über die Länge des Verflüssigers (30) ändert.

21. Kühl- und/oder Gefriergerät nach einem der vorhergehenden Ansprüche, **dadurch gekennzeichnet**, der Kompressor (210) in dem mit dem Latentwärmespeichermittel gefüllten Behältnis (200) aufgenommen ist.

22. Kühl- und/oder Gefriergerät nach einem der vorhergehenden Ansprüche, **dadurch gekennzeichnet, dass** der Latentwärmespeicher derart ausgeführt ist, dass sich das Latentwärmespeichermittel in dem Kühlmittel befindet.

23. Kühl- und/oder Gefriergerät nach Anspruch 22, **dadurch gekennzeichnet, dass** das Latentwärmespeichermittel gekapselt ist.

24. Kühl- und/oder Gefriergerät nach Anspruch 23, **dadurch gekennzeichnet, dass** das Latentwärmespeichermittel in Form von Kügelchen oder Stäben vorliegt.

25. Kühl- und/oder Gefriergerät nach Anspruch 23 oder 24, **dadurch gekennzeichnet, dass** die Kapselung aus Quarz oder einer Folie besteht.

26. Kühl- und/oder Gefriergerät nach einem der vorhergehenden Ansprüche, **dadurch gekennzeichnet, dass** die Oberfläche des Verflüssiger-Latentwärmespeicher-Systems schwarz ausgeführt ist.

27. 44 . Kühl- und/oder Gefriergerät nach einem der vorhergehenden Ansprüche, **dadurch gekennzeichnet, dass** wenigstens ein Ventilator vorgesehen ist, der derart angeordnet ist, dass er um das Verflüssiger-Latentwärmespeicher-System eine Luftströmung erzeugt.

28. Kühl- und/oder Gefriergerät nach einem der vorhergehenden Ansprüche, **dadurch gekennzeichnet, dass** das Latentwärmespeichermittel als Lackersatz auf den Verflüssiger (30) aufgebracht ist.

29. Kühl- und/oder Gefriergerät nach einem der vorhergehenden Ansprüche, **dadurch gekennzeichnet, dass** Wärmetransportmittel vorgesehen sind, die die Abwärme des Verflüssiger-Latentwärmespeicher-Systems an eine andere Stelle transportieren, um dort einen Zusatznutzen durch Wärmeabgabe zu erfüllen.

30. Kühl- und/oder Gefriergerät nach Anspruch 29, **dadurch gekennzeichnet, dass** die Wärmetransportmittel als Luftkanäle oder als Wärmerohre ausgeführt sind.

31. Kühl- und/oder Gefriergerät nach einem der vorhergehenden Ansprüche, **dadurch gekennzeichnet, dass** das Verflüssiger-Latentwärmespeicher-System an oder in dem Kühl- und/oder Gefriergerät angeordnet ist, um dort einen Zusatznutzen durch Wärmeabgabe zu erfüllen.

32. Kühl- und/oder Gefriergerät nach einem der Ansprüche 29 bis 31, **dadurch gekennzeichnet, dass** der Zusatznutzen in der Erwärmung einer Tischplatte bzw. der Gerätedecke, eines Auftaufaches oder einer entnehmbaren Wärmeflasche besteht.

## Claims

1. Refrigerator and/or freezer, comprising at least one coolant circuit, which comprises at least one condenser (30), as well as a latent heat storage with a latent heat storage medium, wherein the latent heat storage is arranged such that it absorbs heat emitted by the condenser (30), and wherein the latent heat storage medium is configured such that it performs a phase change upon absorption of heat emitted by the condenser (30), which, during the standstill of the coolant circuit, is reversed by means of heat dissipation to the environment, **characterized in that** the condenser (30) is accommodated in a container (200) filled with the latent heat storage medium, and that the container (200) is configured such that it serves as an evaporation tray.

2. Refrigerator and/or freezer according to claim 1, **characterized in that** the latent heat storage medium performs a solid/fluid phase change upon absorption of heat.

3. Refrigerator and/or freezer according to claim 1 or 2, **characterized in that** the latent heat storage medium is in the solid form at room temperature.

4. Refrigerator and/or freezer according to one of the preceding claims, **characterized in that** the latent heat storage medium consists of or contains paraffin and/or a salt hydrate.

5. Refrigerator and/or freezer according to one of the preceding claims, **characterized in that** the latent heat storage comprises a medium in which the latent heat storage medium is contained, wherein the medium is configured such that it does not perform any phase change upon absorption of heat emitted by the condenser (30).

6. Refrigerator and/or freezer according to claim 5, **characterized in that** the medium is a matrix in which the latent heat storage medium is embedded.

7. Refrigerator and/or freezer according to one of the preceding claims, **characterized in that** the latent heat storage medium comprises one or multiple additives increasing its heat conductivity.

8. Refrigerator and/or freezer according to claim 7, **characterized in that** the additive is graphite.

9. Refrigerator and/or freezer according to one of the preceding claims, **characterized in that** the latent heat storage completely bears the condenser (30).

10. Refrigerator and/or freezer according to one of the preceding claims, **characterized in that** the condenser (30) comprises heat exchange pipes and that the latent heat storage is, at least in regions, arranged between the heat exchange pipes of the condenser (30).

11. Refrigerator and/or freezer according to one of the preceding claims, **characterized in that** the condenser (30) comprises heat exchange pipes which are accommodated in the latent heat storage.

12. Refrigerator and/or freezer according to one of the preceding claims, **characterized in that** the latent heat storage comprises a shell in which the latent heat storage medium is accommodated.

13. Refrigerator and/or freezer according to one of the preceding claims, **characterized in that** the condenser (30) is arranged in the region of an outer surface of the refrigerator and/or freezer.

14. Refrigerator and/or freezer according to one of claims 1 to 13, **characterized in that** the condenser (30) is at least partially arranged in the housing of the refrigerator and/or freezer.

15. Refrigerator and/or freezer according to one of the preceding claims, **characterized in that** the latent heat storage comprises means for enlarging the surface.

16. Refrigerator and/or freezer according to one of the preceding claims, **characterized in that** the condenser (30) is configured as a wire tube condenser or lamellar condenser.

17. Refrigerator and/or freezer according to one of the preceding claims, **characterized in that** the latent heat storage medium contains one or multiple additives, which change the melting point of the latent heat storage medium.

18. Refrigerator and/or freezer according to one of the preceding claims, **characterized in that** the heat dissipation of the condenser (30) occurs directly to the environment.

19. Refrigerator and/or freezer according to one of the preceding claims, **characterized in that** the latent heat storage medium has a locally changing melting temperature.

20. Refrigerator and/or freezer according to claim 19, **characterized in that** the melting temperature changes continuously over the length of the condenser (30).

21. Refrigerator and/or freezer according to one of the preceding claims, **characterized in that** the compressor (210) is accommodated in the container (200) filled with the latent heat storage medium.

22. Refrigerator and/or freezer according to one of the preceding claims, **characterized in that** the latent heat storage is configured such that the latent heat storage medium is located in the coolant.

23. Refrigerator and/or freezer according to claim 22, **characterized in that** the latent heat storage medium is encapsulated.

24. Refrigerator and/or freezer according to claim 23, **characterized in that** the latent heat storage medium is present in the form of beads or small sticks.

25. Refrigerator and/or freezer according to claim 23, **characterized in that** the encapsulation consists of quartz or a film.

26. Refrigerator and/or freezer according to one of the preceding claims, **characterized in that** the surface of the condenser/latent heat storage system is black.

27. Refrigerator and/or freezer according to one of the preceding claims, **characterized in that** at least one fan is provided, which is arranged in such a way that it produces an airstream around the condenser/latent heat storage system.

28. Refrigerator and/or freezer according to one of the preceding claims, **characterized in that** the latent heat storage medium is applied on to the condenser as a paint replacement.

29. Refrigerator and/or freezer according to one of the preceding claims, **characterized in that** heat transport means are provided, which transport the waste heat of the condenser/latent heat storage system to another location, in order to provide an additional benefit by heat emission there.

30. Refrigerator and/or freezer according to claim 29, **characterized in that** the heat transport means are configured as air ducts or heat pipes.

31. Refrigerator and/or freezer according to one of the preceding claims, **characterized in that** the condenser/latent heat storage system is arranged on or in the refrigerator and/or freezer, in order to provide an additional benefit by heat emission there.

32. Refrigerator and/or freezer according to one of claims 29 to 31, **characterized in that** the additional benefit lies with the heating of a tabletop or of a ceiling of the device, of a thawing compartment or of a removable hot-water bottle.

## Revendications

1. Appareil de réfrigération et/ou de congélation comprenant au moins un circuit de fluide réfrigérant, lequel comporte au moins un condenseur (30), ainsi qu'un accumulateur de chaleur latente doté d'un agent d'accumulation de chaleur latente, l'accumulateur de chaleur latente étant disposé de manière à absorber de la chaleur dégagée par le condenseur (30), et l'agent d'accumulation de chaleur latente étant réalisé de manière à effectuer un changement de phase lors de l'absorption de chaleur dégagée par le condenseur (30), ledit changement de phase étant inversé pendant le temps de maintien du circuit de fluide réfrigérant par dégagement de chaleur vers le milieu ambiant, **caractérisé en ce que** le condenseur (30) est reçu dans un contenant (200) rempli de l'agent d'accumulation de chaleur latente et **en ce que** le contenant (200) est réalisé de manière à servir de bac d'évaporation.

2. Appareil de réfrigération et/ou de congélation selon la revendication 1, **caractérisé en ce que** l'agent d'accumulation de chaleur latente effectue un changement de phase solide/liquide lors de l'absorption de chaleur.

3. Appareil de réfrigération et/ou de congélation selon la revendication 1 ou 2, **caractérisé en ce que** l'agent d'accumulation de chaleur latente est solide à température ambiante.

4. Appareil de réfrigération et/ou de congélation selon l'une des revendications précédentes, **caractérisé en ce que** l'agent d'accumulation de chaleur latente contient de la paraffine et/ou un hydrate de sel ou en est constitué.

5. Appareil de réfrigération et/ou de congélation selon l'une des revendications précédentes, **caractérisé en ce que** l'accumulateur de chaleur latente comporte un moyen, dans lequel est reçu l'agent d'accumulation de chaleur latente, le moyen étant réalisé de manière à n'effectuer aucun changement de phase lors de l'absorption de chaleur dégagée par le condenseur (30).

6. Appareil de réfrigération et/ou de congélation selon la revendication 5, **caractérisé en ce que** le moyen est une matrice, dans laquelle l'agent d'accumulation de chaleur latente est incorporé.

7. Appareil de réfrigération et/ou de congélation selon l'une des revendications précédentes, **caractérisé en ce que** l'agent d'accumulation de chaleur latente comporte un ou plusieurs additifs qui augmentent sa conductibilité thermique.

8. Appareil de réfrigération et/ou de congélation selon la revendication 7, **caractérisé en ce que** l'additif est du graphite.

9. Appareil de réfrigération et/ou de congélation selon l'une des revendications précédentes, **caractérisé en ce que** l'accumulateur de chaleur latente porte complètement le condenseur (30).

10. Appareil de réfrigération et/ou de congélation selon l'une des revendications précédentes, **caractérisé en ce que** le condenseur (30) comporte des tubes échangeurs de chaleur et **en ce que** l'accumulateur de chaleur latente est disposé au moins par endroits entre les tubes échangeurs de chaleur du condenseur (30).

11. Appareil de réfrigération et/ou de congélation selon l'une des revendications précédentes, **caractérisé en ce que** le condenseur (30) comporte des tubes échangeurs de chaleur qui sont reçus dans l'accumulateur de chaleur latente.

12. Appareil de réfrigération et/ou de congélation selon l'une des revendications précédentes, **caractérisé en ce que** l'accumulateur de chaleur latente comporte une enveloppe dans laquelle l'agent d'accumulation de chaleur latente est reçu.

13. Appareil de réfrigération et/ou de congélation selon l'une des revendications précédentes, **caractérisé en ce que** le condenseur (30) est disposé dans la zone d'une surface extérieure de l'appareil de réfrigération et/ou de congélation.

14. Appareil de réfrigération et/ou de congélation selon l'une des revendications 1 à 13, **caractérisé en ce que** le condenseur (30) est disposé au moins en partie dans la carcasse de l'appareil de réfrigération et/ou de congélation.

15. Appareil de réfrigération et/ou de congélation selon l'une des revendications précédentes, **caractérisé en ce que** l'accumulateur de chaleur latente comporte des moyens d'agrandissement de la surface.

16. Appareil de réfrigération et/ou de congélation selon l'une des revendications précédentes, **caractérisé en ce que** le condenseur (30) est réalisé sous la forme d'un condenseur à grille ou à lamelles.

17. Appareil de réfrigération et/ou de congélation selon l'une des revendications précédentes, **caractérisé en ce que** l'agent d'accumulation de chaleur latente comporte un ou plusieurs additifs qui modifient le point de fusion de l'agent d'accumulation de chaleur latente.

18. Appareil de réfrigération et/ou de congélation selon l'une des revendications précédentes, **caractérisé en ce que** le dégagement de chaleur du condenseur (30) est effectué vers l'air ambiant de manière indirecte.

19. Appareil de réfrigération et/ou de congélation selon l'une des revendications précédentes, **caractérisé en ce que** l'agent d'accumulation de chaleur latente présente une température de fusion se modifiant localement.

20. Appareil de réfrigération et/ou de congélation selon la revendication 19, **caractérisé en ce que** la température de fusion se modifie en continu sur la longueur du condenseur (30).

21. Appareil de réfrigération et/ou de congélation selon l'une des revendications précédentes, **caractérisé en ce que** le compresseur (210) est reçu dans le contenant (200) rempli de l'agent d'accumulation de chaleur latente.

22. Appareil de réfrigération et/ou de congélation selon l'une des revendications précédentes, **caractérisé en ce que** l'accumulateur de chaleur latente est réalisé de telle manière que l'agent d'accumulation de chaleur latente se trouve dans le fluide réfrigérant.

23. Appareil de réfrigération et/ou de congélation selon la revendication 22, **caractérisé en ce que** l'agent d'accumulation de chaleur latente est encapsulé.

24. Appareil de réfrigération et/ou de congélation selon la revendication 23, **caractérisé en ce que** l'agent d'accumulation de chaleur latente se présente sous la forme de billes ou de tiges.

25. Appareil de réfrigération et/ou de congélation selon la revendication 23 ou 24, **caractérisé en ce que** l'encapsulage est constitué de quartz ou d'une feuille.

26. Appareil de réfrigération et/ou de congélation selon l'une des revendications précédentes, **caractérisé en ce que** la surface du système condenseur/accumulateur de chaleur latente est réalisée en noir.

27. Appareil de réfrigération et/ou de congélation selon l'une des revendications précédentes, **caractérisé en ce qu'**au moins un ventilateur est prévu, qui est disposé de manière à générer un flux d'air autour du système condenseur/accumulateur de chaleur latente.

28. Appareil de réfrigération et/ou de congélation selon l'une des revendications précédentes, **caractérisé en ce que** l'agent d'accumulation de chaleur latente est appliqué sur le condenseur (30) en remplacement d'une peinture.

29. Appareil de réfrigération et/ou de congélation selon l'une des revendications précédentes, **caractérisé en ce que** des moyens de transport de la chaleur sont prévus, qui transportent la chaleur dissipée du système condenseur/accumulateur de chaleur latente dans un autre endroit, pour y apporter une utilité supplémentaire par dégagement de chaleur.

30. Appareil de réfrigération et/ou de congélation selon la revendication 29, **caractérisé en ce que** les moyens de transport de la chaleur sont réalisés sous la forme de conduits d'air ou de caloducs.

31. Appareil de réfrigération et/ou de congélation selon l'une des revendications précédentes, **caractérisé en ce que** le système condenseur/accumulateur de chaleur latente est disposé sur ou dans l'appareil de réfrigération et/ou de congélation pour y apporter une utilité supplémentaire par dégagement de chaleur.

32. Appareil de réfrigération et/ou de congélation selon l'une des revendications 29 à 31, **caractérisé en ce que** l'utilité supplémentaire consiste à réchauffer un dessus de table ou le dessus de l'appareil, un compartiment de décongélation ou une bouillotte amovible.
